Europäisches Patentamt

European Patent Office

Office européen des brevets

(19)

(11) Numéro de publication: **0 227 723**
**B1**

(12) **FASCICULE DE BREVET EUROPEEN**

(45) Date de publication du fascicule du brevet: **19.09.90**

(51) Int. Cl.⁵: **G 03 B 15/08**

(21) Numéro de dépôt: **86903435.5**

(22) Date de dépôt: **19.06.86**

(86) Numéro de dépôt international:
**PCT/FR86/00210**

(87) Numéro de publication internationale:
**WO 87/00302 15.01.87 Gazette 87/01**

(54) **PROCEDE DE REALISATION D'UNE COMPOSITION PHOTOGRAPHIQUE EVOLUTIVE ET COMPOSITION AINSI OBTENUE.**

(30) Priorité: **25.06.85 FR 8509663**

(43) Date de publication de la demande:
**08.07.87 Bulletin 87/28**

(45) Mention de la délivrance du brevet:
**19.09.90 Bulletin 90/38**

(84) Etats contractants désignés:
**AT BE CH DE FR GB IT LI LU NL SE**

(56) Documents cités:
**FR-A-2 203 991**
**US-A-1 372 811**

(73) Titulaire: **CARDAIRE, Jean-Claude**
**2, rue du Général Leclerc**
**F-80400 Ham (FR)**

(72) Inventeur: **CARDAIRE, Jean-Claude**
**2, rue du Général Leclerc**
**F-80400 Ham (FR)**

EP 0 227 723 B1

Courier Press, Leamington Spa, England.

## Description

On connait le jeu dénommé "puzzle" qui consiste à reconstituer une image en juxtaposant, de façon appropriée des éléments obtenus en découpant l'image suivant un contour plus ou moins compliqué. Il va de soi que l'image réalisée est toujours la même et ne peut être modifiée.

D'autre part, dans la technique de l'enregistrement d'un dessin animé, on a recours couramment au trucage qui consiste à faire évoluer un sujet en mouvement, sur un paysage de fond invariable, sans avoir à redessiner le paysage pour chaque image filmée. Pour cela le sujet est peint dans chacune de ses positions sur une feuille transparente que l'on applique ensuite en position appropriée sur le dessin représentant le paysage. Le sujet étant opaque, il masque la portion de paysage sousjacente, tandis que le restant du paysage est visible par transparence. Une variante de ce procédé est utilisée dans le tournage de certaines séquences de film, avec personnages réels. Les personnages sont filmés en studio sur un fond neutre transparent, et le décor est filmé sans les personnages. Le film des personnages est ensuite projeté en superposition sur celui du décor, de manière à donner l'illusion que la scène ainsi reconstitutée à été tournée en réel.

Ainsi, dans tous ces procédés connus, le sujet évolutif est filmé séparément dans un cadre qui n'est pas celui du film définitif.

La présente invention concerne un procédé de réalisation d'une composition photographique évolutive qui se distingue des procédés susmentionnés par le fait que le sujet que l'on désire représenter en des emplacements différents de la photographie est photographié dans le cadre même où il évolue.

Le procédé selon l'invention est defini dans les revendications 1 et 2. La présente invention concerne également une composition photographique évolutive pour realiser des images evolutives telle que definie dans la revendication 6.

Le réseau de lignes repères peut être constitué par un quadrillage à l'échelle du tirage final, que l'on place sur le verre dépoli du viseur de l'appareil. Ce quadrillage peut être à mailles carrées, rectangulaires ou de toute autre forme appropriée, pourvu qu'elles soient identiques pour toutes les épreuves tirées.

On notera bien que le procédé selon l'invention n'a rien à voir avec un puzzle, puisque dans ce dernier, les pièces de puzzle sont toutes uniques et représentent des éléments d'image qui ne peuvent occuper qu'une seule place sur la composition finale, alors que dans le présent procédé, le sujet variable peut être placé, au gré du possesseur, un jour en un emplacement donné sur la photo de base et un autre jour en un autre emplacement, en restructurant ou en destructurant l'image. Les éléments découpés de photographie que l'on applique sur la photographie de base cachent les positions sousjacentes de cette dernière mais s'intégrent parfaitement dans le paysage d'ensemble étant donné que lesdits éléments représentent autour du sujet des portions de décor identiques à celles de ladite photographie de base.

On comprend également que la composition selon l'invention se distingue nettement du dessin animé ou des films truqués signalés précédemment, puisque dans ces derniers, le sujet est filmé sur un fond neutre par exemple transparent, alors que dans le cas présent, le sujet est photographié dans le paysage même ou il évolue.

Le sujet peut être constitué par une personne ou un groupe de personnes, par des animaux, des accessoires divers, meubles etc..., photographiés dans un cadre donné, par exemple dans un local ou dans un paysage extérieur. La composition pourra montrer un jour le paysage nu un autre jour, le ou lesdits sujets en un point du paysage ou encore un autre jour les mêmes ou d'autres subjets dans le même paysage, ceci en intervenant sur les éléments contenant le ou les sujets.

Le procédé selon l'invention peut trouver une multitude d'applications interessantes dans les domaines les plus variés.

Ainsi, un portrait ou une photographie de famille sont souvent monotones parce qu'ils représentent des sujets figés. Le procédé selon l'invention permet de les rendre plus vivantes, en modifiant de temps à autre l'emplacement ou l'attitude de l'un des sujets ou de plusieurs sujets.

D'autre part, on peut réaliser des jeux éducatifs basés sur le procédé selon l'invention, pour l'enseignement de disciplines aussi variées que le code de la route, l'astronomie, la métérologie, la publicité, la décoration, et plus généralement toutes les disciplines où un élément de paysage change de forme ou de position dans un décor invariable.

Avantageusement, les éléments de photographie devront être fixés de façon amovible sur la photographie de base par tout moyen approprié, de façon à pouvoir les détacher ultérieurement par exemple pour les remplace par d'autres éléments. On pourra par exemple, les faire adhérer au moyen de pastilles ou de rubans auto-collants réutilisables du genre "scotch 3M" ou de bandes connues sous la marque "Velcro". Lesdits éléments peuvent encore être collés sur des plaques aimants, tandis que la photographie de base est collé sur un support métallique féreux ou vice versa.

Un exemple du procédé selon l'invention, sera décrit à présent en regard des dessins annexés dans lesquels:

La figure 1 montre une photographie de base représentant une chambre meublée sans personnage;

Les figures 2 et 3 montrent respectivement des photographies de la même chambre dans laquelle un enfant occupe deux positions différentes;

Les figures 4 et 5 représentent deux éléments de photographies découpés sur les photographies des figures 2 et 3 selon les lignes de repère; et

La figure 6 est un exemple de composition qui peut être réalisée au moyen des photographies des figures 1, 4, et 5.

Il va de soi que les dessins ne sont donnés qu'a titre d'exemple non limitatif, uniquement pour expliquer le principe de l'invention. On peut envisager qu'au lieu de remplacer des éléments par d'autres, on puisse hoter ou accumuler des éléments, le principe de prise du vue et de technique restant le même: Exemple un paysage photographié à différentes heures de la journée, ou en différentes saisons, ainsi certains éléments seront de jour d'autres de nuit ou encore d'été ou d'hiver etc...

Comme on l'a déja exposé, l'invention s'applique à toutes sortes de photographies représentant des personnes, des animaux ou des objets etc..., dans un cadre quelconque.

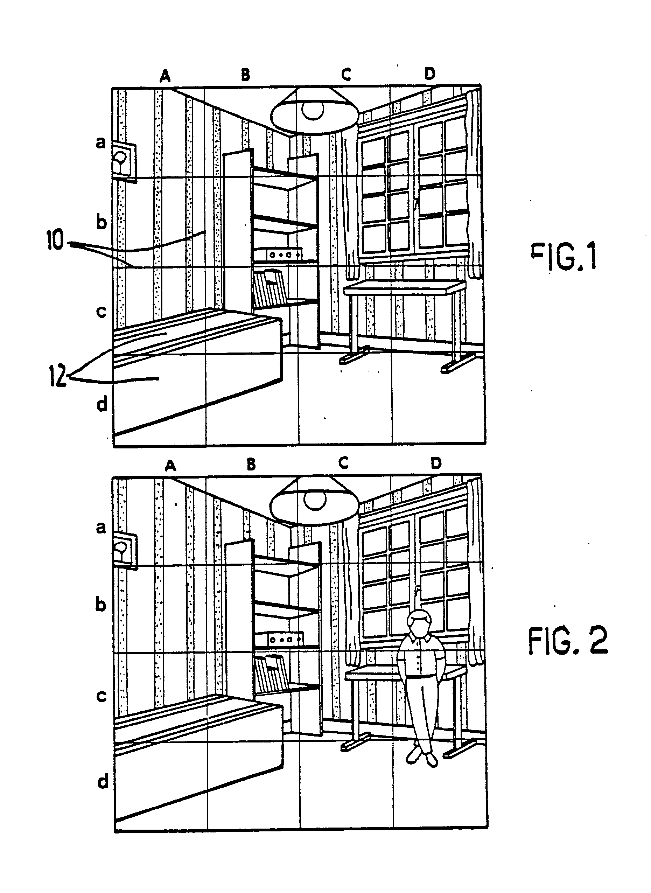

La photographie représentée à la figure 1 a été prise an moyen d'un appareil photographie monté sur trépied, dont le verre dépoli du viseur est muni d'un quadrillage de lignes de repères.

On peut tout aussi bien réaliser cette prise de vue à l'aide d'un appareil sans verre dépoli, pourvu toutefois que l'on ait placé d'une manière adéquate en fonction du type de l'appareil, devant, sur, ou derrière le verre de visée, un quadrillage ou tout autre réseau géométrique de lignes repères, exactement à l'échelle du quadrillage de lignes repères se trouvant sur l'image obtenue. Lors du tirage de cette image, on place un maillage optique constitué par un quadrillage ou tout autre réseau géométrique de manière à obtenir sur le positif, le repérage qui correspond à celui du verre de visée. Ceci peut s'obtenir de plusieurs façons, à la prise de vue ou au tirage.

Soit à l'aide d'un margeur spécial composé de fils métalliques ou autres, en contact avec le papier photographique à exposer. Soit à l'aide d'un film ou d'un verre transparent marqué du réseau de lignes repères placé en contact avec le négatif développé, à tirer. Soit à l'aide lors de la prise de vue, d'un film ou d'un verre transparent marqué du quadrillage de lignes repères, placé en contact avec le négatif non impréssioné dans la chambre de l'appareil photographique, le négatif développé sera ainsi directement marqué par le réseau de lignes repères. Soit encore de toute autre manière.

Sur la photographie représentée à la figure 1, apparaît donc un quadrillage de lignes 10 qui définit une pluralité d'éléments photographique que l'on repère sur la figure 1 au moyen des coordonnées A à D et *a* à *d*. Dans le cas illustré, le quadrillage est carré, mais on peut aussi bien lui donner toute autre forme géométrique, telle que rectangulaire, triangulaire ou même des formes moins régulières.

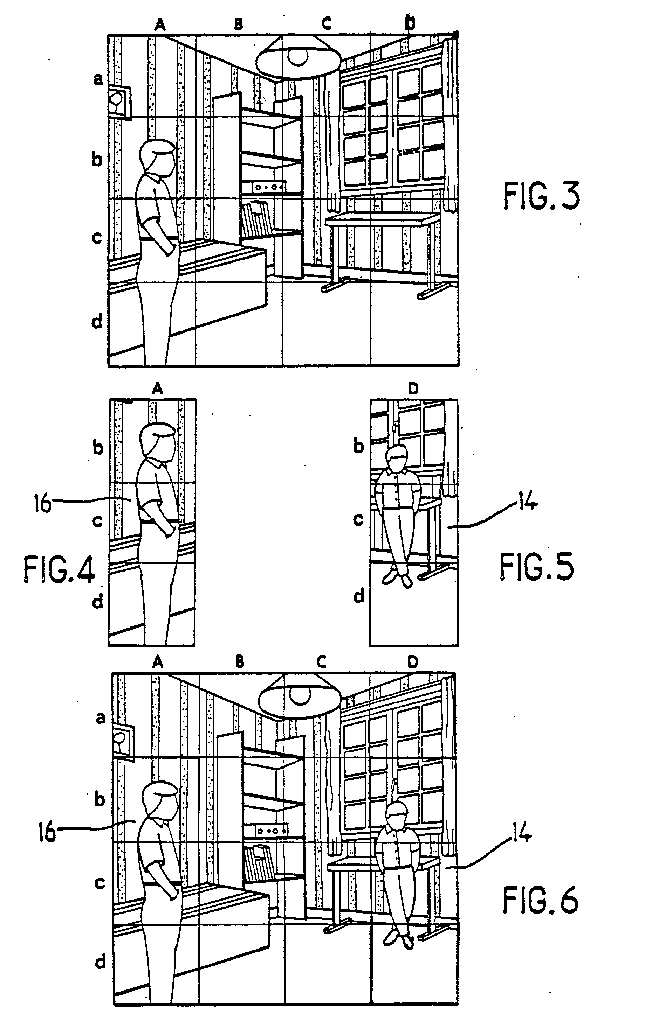

Sans changer la position de l'appareil, ni le viseur ni l'objectif, et avec les mêmes conditions d'éclairage (toutes ces données peuvent être remises en question pour des utilisations particulières que l'on explique plus loin), on prend ensuite des photographies figures 2 et 3, du même décor, en plaçant, pour chaque prise du vue, le sujet en des endroits différents de la chambre. Il faut prévoir une profondeur de champ importante pour ne pas avoir à refaire la mise au point entre chaque prise de vue.

Il en résulte que les photographiques obtenues présentent un réseau de lignes repères 10 identiques à celui de la figure 1 et qui définissent des éléments de photographies directement superposables à ceux quileur correspondent sur la figure 1. On peut non seulement faire varier à chaque prise de vue, la position du sujet mais aus aussi le sujet lui même. Par exemple, on peut introduire une autre ou plusieurs personnes, un animal ou un objet.

A partir de toutes les photographies ainsi obtenues, on peut réaliser une photo évolutive. Pour cela, on découpe sur lesdites photographies le long des lignes repères 10, les éléments de photographie qui contiennent le sujet? Par exemple sur la figure 2, on sépare la bande 14 montrée sur la figure 6 et qui est formée des éléments Db, Dc et Dd. De même, sur la figure 3, on découpe la bande 16 formé des éléments Ab, Ac et Ad Qui est représentée sur la figure 5. Dans les examples représentés, le sujet évolutif intérresse trois éléments alignés verticalement, mais il va de soi qu'il peut occuper un ou plusieurs éléments disposés de façon quelconque, et ces éléments peuvent être ou non découpés selon les lignes repères.

Une ou plusieurs desdites bandes ou éléments découpés peuvent ensuite être appliqués sur la photographie de base de la figure 1. Ainsi, pendant un certain temps, on exposera cette dernière dans son état initial. Quelques temps après, on pourra appliquer sur elle la bande 14 pour obtenir la photographie de la figure 2. Un autre moment, on pourra retirer la bande 14 et fixer la bande 16 afin d'obtenir la photographie de la figure 3. On pourra encore appliquer les deux bandes 14 et 16 pour obtenir la photographie de la figure 4. Avec plusieurs prises de vue, on pourra donc réaliser une photographie évolutive ayant un grand nombre de combinaisons de positions du sujet.

On peut ainsi restructurer une image ou même déstructurer cette image et devenir "créateur" dans son tableau. (et même sortir certains éléments de l'image).

Ainsi qu'on l'a déja expliqué, les éléments doivent pouvoir être fixés de façon détachable sur la photographie de base et sans endommager la surface de celle-ci. Par exemple, ils peuvent être appliqués sur une plaque fereuse et la photographie de base sur support aimanté, ou vice versa. Ou encore lesdits éléments de photographie de base peuvent être munis sur leur face verso de bandes de type marque "Velcro", pour l'utilisation du procédé sur tissus. Ils peuvent tout aussi bien sur leur verso, recevoir une surface adhésive double face réutilisable de type marque "3M". Ou tous autres moyens de fixation provisoire.

Dans le cas où la photographie de base n'est pas marquée d'un réseau de lignes, elle se présente sous la forme d'une image classique. Les éléments supplémentaires, (personnages, objets, etc...), peuvent être plaqués et venir en raccord sur l'image de base, de par les lignes repères naturelles de cette image, par simple découpe. La fixation des éléments à adapter sur l'image de base est comme indique plus haut, par tout moyen de fixation provisoire.

Une variante consisterait à découper le ou les sujets à placer sur l'image de base suivant leur propre contour. On obtient ainsi une silhouette précisé. Le sujet ainsi sorti de son environnement, peut être replacé sur l'image de base quadrillée ou non.

Pour réaliser ce détourage assez délicat, d'une manière aisée et rapide, les photographies étant tirées au formant désiré, collées sur le support convenable précédemment décrit et permettant leur juxtaposition, on peut envisager entre autre l'utilisation d'un lecteur du genre crayon optique ou palpeur, relié à un ordinateur enregistrant levtracé du ou des sujets à découper.

A partir de ces données enregistrées par l'ordinateur, on peut envisager de faire piloter par celui-ci un système de découpage à laser ou autre.

Le quadrillage de repères dans le viseur pourrait à la limite être supprimé, mais il reste très pratique pour faciliter le cadrage et la disposition des sujets ou objets à placer?

On peut aussi envisager l'utilisation d'autres objectifs et des conditions d'éclairage différentes pour une utilisation artistique de l'invention et selon le désir de l'utilisateur. Exemple, l'image de base est réalisée avec un grand angle, et les images supplémentaires sont réalisées avec un téléobjectif ou un objectif dit standard, de façon à ce que les éléments à rapporter sur l'image de base, se trouvent-être des éléments ressortis en gros plans de détail, ou vice versa.

On peut aussi imaginer selon l'invention, une image de base réalisée en noir et blanc et les éléments à rapporter réalisés en couleur ou vice versa.

Les conditions d'éclairage peuvent être volontairement différentes: A titre d'exemple, un paysage photographié à différentes heures de la journée pour montrer le temps qui passe en plaçant ou en hotant des éléments sur l'image de base.

On peut aussi envisager à l'inverse que l'image de base représente une photographie avec beaucoup de personages dans un paysage et des éléments de paysage sans personage viennent se placer selon l'invention sur les personages et ainsi d'hoter ou de faire réaparaitre au gré de la fantaisie l'un ou l'autre des personages.

On peut aussi selon l'invention, replacer sur l'image de base, un ou des sujets oubliés lors de la prise de vue initiale, ou réintroduire ultérieurement d'autres sujets. Exemple, sur l'image de base d'un couple de jeunes mariés, on peut envisager de replacer ultérieurement le ou les enfants issus de ce couple.

Il suffit lors de la prise de vue initiale, de prévoir se sous exposer un négatif, qui sera replacé sur le verre dépoli du viseur de l'appareil, ou de toute autre manière, pour retrouver le cadrage de l'image de base d'origine, et de rephotographier les nouveaux sujets comme indiqué précédemment en visant au travers de ce négatif, ainsi relativement transparent.

Il est bien entendu, que le fait d'utiliser un tel négatif sous exposé n'est qu'une facilité supplémentaire, l'expérience montrant qu'un négatif normalement exposé laisse passer suffisement de lumière pour faire un nouveau cadrage correct.

**Revendications**

1. Procédé de réalisation d'une composition photographique évolutive, caractérisé en ce qu'il consiste à photographier le décor seul, c'est-à-dire des éléments de paysage qui sont appelés à rester inchangés dans la composition photographique, à faire apparaître sur la photographie de base ainsi obtenue un réseau de lignes de repères prédéterminé, pour faciliter la manipulation ultereure, puis, sans bouger l'appareil photographie, ou en le replaçant au même endroit très précisément, à photographier autant de fois qu'on le désire le sujet évolutif en le plaçant, ou en le replaçant à chaque fois en un emplacement différent, ou dans une attitude différente, du même paysage, et à faire apparaitre sur chacune des épreuves successives ainsi obtenues un réseau de lignes repères identique à celuide la photographie de base, lesdites épreuves successives ne se distinguant l'une de l'autre que par la position du sujet, à découper lesdites épreuves selon des lignes repères du réseau, de manière à isoler le ou les éléments contenant le sujet variable, puis à réaliser des images évolutives en appliquant l'un au moins desdits éléments isoles d'au moins l'une des dites epreuves sur son emplacement correspondant sur la photographie de base.

2. Procédé de réalisation d'une composition photographique évolutive, caractérisé en ce qu'il consiste à photographier le décor seul, c'est-à-dire des éléments de paysage qui sont appelés à rester inchangés dans la composition photographique, puis, sans bouger l'appareil photographique, ou en le replaçant au même endroit très précisément, à photographier autant de fois qu'on le désire le sujet évolutif en le plaçant, ou en le replaçant à chaque fois en un emplacement différent, ou dans une attitude différente, du même paysage, de manière à obtenir une pluralité d'épreuves qui ne se distinguent l'une de l'autre que par la position du sujet, à découper lesdites épreuves selon des lignes naturelles existantes dans la photographie, pour l'utilisation du procédé de manière à isoler le ou les éléxents contenant le sujet variable, puis à réaliser des images évolutives en appliquant l'un au moins desdits éléments d'au moins l'une des éprevues sur son emplacement correspondant sur la photographie de base.

3. Procédé selon la revendication 1, caractérisé en ce qu'il consiste à placer sur le verre, ou derrière, ou devant, du viseur, verre dépoli ou non, un maillage de lignes repères, par exemple en forme de quadrillage, puis, lors du tirage, à placer sur le négatif obtenu, un dispositif qui permet de former sur le positif un maillage identique à celui qui se trouve sur le verre du viseur, ledit dispositif étant constitué par un film ou un verre transparent marqué du quadrillage.

4. Procédé selon la revendication 1 caractérisé en ce qu'il consiste à placer sur le verre du viseur dépoli ou non, un maillage de lignes repères par exemple en forme de quadrillage et à placer dans la partie chambre noire de l'apapreil en contact avec le négatif non impressioné, un verre ou un film transparent marqué du même réseau de lignes que celui du viseur.

5. Procédé selon la revendication 1, caractérisé en ce qu'il consisté à placer sur le verre du viseur déploi ou non un maillage de lignes repères, par exemple en forme de quadrillage, puis, lors du tirage, à placer su sur le positif un dispositif permettant de former sur la photographie, un maillage identique, à l'échelle de celui placé sur, devant, ou derrière le viseur. Ledit dispositif étant constitué par un margeur composé de fils.

6. Composition photographique évolutive, pour réaliser des images évolutives caractérisée en ce qu'elle comprend d'une part, une photographie de base représentant un décor donné, et sur lequel est marqué un quadrillage de lignes repères (10) qui définissent sur ladite photographie de base des éléments unitaires de photographie (12), et d'autre part un jeu d'éléments de photographie (14, 16) obtenus en photographiant, dans le même décor avec les mêmes optiques du ces optiques différentes dans certains cas, un sujet évolutif occupant pour chaque prise du vue une position ou une expression différente, ledit éléments de photographie (14, 16) étant egalment marqués d'un quadrillage de lignes repères identique à celui de la photographie de base, puis en découpant lesdits éléments de photographie (14, 16) selon les lignes repères de façon à isoler le sujet, ladite photographie de base et lesdits éléments de photographie étant munis de moyens adhésifs aimantés au autres permettant à ces derniers d'être fixés de façon détachable sur la photographie de base.

7. Composition photographique évolutive selon la revendication 6, caractérisée en ce que lesdits éléments de photographie et ladite photographie de base peuvent être collés sur des supports de renfort destinés à les rigidifier.

8. Composition photographique évolutive selon l'une des revendications (6 et 7), caractérisée en ce que lesdits moyens adhésifs sont constitués par des bandes dites "Velcro" ou autres, collés sur la face verso des supports des éléments de photographie, s'appliquant sur la photographie de base en tissus.

9. Compostion photographique évolutive selon revendications 6, caractérisée en ce que lesdits moyens adhésifs sont constitués par des pastilles ou bandes adhésives double face réutilisables type "Scotch 3M" ou autres, collées sur la face verso des supports des éléments de photographie à placer provisoirement sur la photographie de base.

10. Composition photographie évolutive selon revendications 6, caractérisée en ce que lesdits éléments de photographie sont collés sur des supports métalliques férreux, tandis que la photographie de base est collée sur une plaque aimant, ou vice versa par tout autre moyen de fixation provisoire.

11. Procédé selon l'une des revendications 1 à 5, caractétrisée en ce que l'image de base est réalisée grace à l'utilisation d'un objectif type grand angle, et les éléments à y rapporter sont réalisés grace à l'utilisation d'un objectif type télé ou vice versa.

12. Composition photographique évolutive selon l'une des revendications 6 à 10, caractérisée en ce que les éléments à rapporter sur l'image de base sont volontairement placés hors des limites de cette image de façon à déstructurer l'image initiale.

13. Procédé selon l'une des revendications 1 à 5 et 11, caractérisée par l'utilisation d'un négatif, sous exposé placé sur ou sous le verre de visée dépoli ou non, d'une première prise de vue, pour replacer ultérieurement sur l'image de base des éléments manquants lors de la prise de vue initiale.

14. Composition photographie évolutive selon l'une des revendications 6 à 10 et 12, caractérisée par le fait que l'image de base est en "Noir et Blanc" et les éléments à y rapporter sont en couleur ou vice versa.

15. Procédé selon l'une des revendications 1 à 5, 11 et 13, caractérisée par l'accumulation d'éléments sur l'image de base, les uns sur les autres afin d'obtenir une image évolutive en épaisseur, en ôtant ou en replaçant les éléments sur l'image de base, ou vice versa.

16. Composition photographique évolutive selon l'une des revendications 6 à 10, 12 et 14, caractérisée par le fait que l'image de phase contient, (en exemple) de nombreux personages et les éléments à rapporter sur l'image de base contiennent le même décor sans personage afin de les faire disparaître au fur et à mesure en plaçant les éléments sur l'image de base.

17. Procédé selon l'une des revendications 1 à 5, 11, 13 et 15, caractérisée par l'utilisation du procédé à différents moments en replaçant l'appareil photographique au même endroit très exactement pour des interventions dans le temps style construction d'usine ou autre afin de faire apparaître sur l'image de base au fur et à mesure les éléments qui ont changés, dans ce temps.

18. Procédé selon l'une des revendications 1 à 5, 11, 13, 15 et 17, caractérisée par l'utilisation d'un ordinateur commandant un lecteur genre crayon optique et un un système de découpage à laser ou autre, pour découper les images complémentaires à placer sur l'image de base, selon leur propre contour.

**Patentansprüche** ·

1. Realisierungsverfahren einer evolutiven Photokomposition, die dadurch charakterisiert wird, dass nur der Bildhintergrund fotografiert wird, d.h. die landschaftlichen Komponente die unverändert in der Photographie bestehen bleiben. Auf dem Basisphoto hebt sich ein Netzwerk von prädeterminierten Linien u. Anhaltspunkten heraus, das die nachfolgenden Arbeitsvorgänge erleichtern wird. Sodann, ohne die Kamera zu verschieben (oder nur bis zum vorhergehenden Ausgangspunkt, wird das sich bewegende Objekt so oft wie gewollt fotografiert, in dem man es jedes Mal an einem anderen Punkt setzt, oder versetzt, oder auch in verschiedenen Stellungen in die gleiche Hintergrundaufnahme fotografiert;

Auf jedem der sich nach folgenden Aufnahmen wird ein Netzwerk von Linien und Anhaltspunkten sichtbar, die mit dem Netzwerk der Basisfotografie vollkommen identisch sind. Diese sich repetierenden Aufnahmen sind bis auf die Position des Objekts also völlig gleich;

Werden diese Aufnahmen nun anhand des Netzwerks zerlegt, so werden die jenigen Elemente, die das oder die variablen Objekte beinhalten, isoliert;

Evolutive Aufnahmen werden dadurch realisiert, dass mindestens eines der isolierten Elemente (die das variable Objekt enthalten) auf seinen Platz im Basisphoto übertragen wird.

2. Realisierungsverfahren einer evolutiven Fotokomposition, dadurch charakterisiert, dass nur der Bildhintergrund, d.b. die unbeweglichen Elemente einer Landschaft, fotografiert werden um denach, ohne den Fotoapparat zu bewegen, oder nur ganz präzise bis zum gleichen vorherigen Ort, das bewegliche Objekt so oft wie gewünscht am gleichen oder anderen Punkt zu fotografieren. Es ist auch möglich, dass sich bewegende Objekt in verschiedenen Stellungen in der selben Landschaft aufzunehmen, um eine Vielzahl au aufnahmen zu erhalten, die sich nur in der Position des Objekts unterscheiden. Die dieserart gemachten Aufnahmen werden anhand der in den Bildern existierenden Linien zerschnitten, um das variable Objekt, d.h. die Elemente die es beinhaltet, zu isolieren. Danach werden die evolutiven Aufnahmen realisiert, in dem man mindestens eines dieser Elemente aus einer dieser Aufnahmen in den dafür freigebliebenen Raum auf dem Basisfoto überträgt.

3. Verfahren, wie in Punkt 1 dargelegt, dass dadurch charakterisiert ist, dass man auf das matte oder polierte Glas des Suchers (oder davor/ oder dahinter) ein Gitterwerk von Linien setzt (z.B. in Form eines Würfelmusters) um während der Entwicklung, über dem so entstandenen Negatif eine Vorrichtung zu setzen, die auf dem Positif das gleiche Gitterwerk erscheinen lässt, wie auf der Sucherscheibe. Die o.g. Vorrichtung kann aus einem Film oder transparenten Glas bestehen, auf dem das Würfelmuster aufgeprägt ist.

4. Verfahren, wie in Punkt 1 dargelegt, das darin besteht, auf der matten oder polierten Sucherscheibe ein Gitterwerk an Linien, z.B. in Würfelmuster zu plazieren, gleichzeitig wird in der Dunkelkammer des Fotoapparates—in Kontakt mit dem nichtbelichteten Negatif—eine Glasscheibe oder ein transparenter Film mit dem selben Würfelmuster (wie auf der Sucherscheibe) angebracht.

5. Verfahren, gemäß Punkt 1, das darin besteht, auf die matte oder depolierte Sucherscheibe ein Netzwerk von Linien zu setzen (z.B. in Würfelmuster) um dann, während der Entwicklung, über das Positif eine Vorrichtung zu setzen, die auf der Fotografie desselbe Muster formt, im selben Größenverhältnis wie dasjenige das auf, vor oder hinter der Sucherscheibe angebracht wurde. Die Vorrichtung besteht aus einem Anlegeapparat aus Fäden.

6. Evolutive Fotokomposition im evolutive Bilder zu realisieren, dadurch charakterisiert, dass die

1. aus einer Basisfotografie mit einem gegebenen Dekor besteht, über welcher ein Würfelmuster an Linien (10) angelegt ist die auf der o.g. Basisfotografie Elementeinheiten (12) der Fotografie definieren.

2. Bestehend aus einer Anzahl von Elementen (14, 16), die ebenfalls durch Fotografie, im gleichen Dekor, mit der gleichen Optik (oder, in gewissen Fällen mit verschiedener Optik) ein bewegliches Objekt darstellen, dass bei jeder Aufnahme eine andere Position oder Expression zeigt. Die zuvor besprochenen Elemente (14, 16), sind ebenfalls durch ein Netzwerk, identisch dem der Basisfotografie, markiert.

In dem diese Elemente (14, 16) anhand der linienführung des Gitterwerks zerschnitten werden, so dass das Objekt isoliert wird. Die o.g. Basisfotographie u. die o.g. Fotoelemente werden mit Hilfe von magnetischen Aufsätzen (o. anderen) auf dem Basisfoto angebracht, so dass sie jederzeit wieder davon abgelöst werden können.

7. Evolutive fotografische Komposition, wie in Punkt 6 dargelegt, die daraus besteht, das die genannten fotografischen Elemente u. die genannte Basisfotografie auf stärkere Unterlagen geklebt werden, die auf Aufnahmen versteifen.

8. Evolutive Fotokomposition die, wie in Punkt 6 und 7 beschrieben, charakterisiert ist, dadurch, dass die vorher besprochenen Mittel zum Aufkleben aus Klett-Bändern oder anderem Material bestehen—auf die Rückseite der materiellen Basis der fotografischen Elemente aufgeklebt sind—und sich auf die Basisfotografie aus Stoff aufsetzen.

9. Evolutive fotografische Komposition, wie in Punkt 6 beschrieben, in dem die erwähnten "Klebemittel" aus selbstklebenden Stickern oder doppelseitigen Klebebändern des Typs "Scotch 3 M" o.ä. bestehen. Die auf die Rückseite der die fotografischen Elemente beinhaltenden Aufnahme geklebt werden um vorübergehend auf dem Basisfoto angebracht zu werden.

10. Evolutive Fotokomposition, bestehend, wie in Punkt 6 charakterisiert, aus fotografischen Elementen die auf eine metallische, eisenhaltige Basis aufgeklebt sind, während die Basisfotografie auf eine magnetische Platte geklebt wird, oder auf jede andere provisorische Art u. Weise.

11. Verfahren, charakterisiert wie in Punkt 1—5, in dem die Basisfotografie durch Zuhilfenahme eines großwirkligen Objektifs realisiert wird, und die dazugehörigen beweglichen Elemente mit Hilfe eines Teleobjektifs, oder umgekehrt realisiert werden.

12. Evolutive fotografische Komposition, charakterisiert wie in Punkt 6—10 und ebenfalls dadurch, dass die Elemente die auf das Basisfoto eingebracht werden sollen, willkürlich ausserhalb der grenzen dieser Aufnahme plaziert werden, um die Erstaufnahme zu destrukturieren.

13. Verfahren, beschrieben wie in Punkt 1—5 und 11, dadurch charakterisiert, dass das Negatif, unterbelichtet, auf oder unter der matten oder polierten Sucherscheibe plaziert ist, während einer ersten Aufnahme, un nachträglich auf dem Basisfoto die fehlenden Elemente einfügen zu könne.

14. Evolutive Fotokomposition, wie in Punkt 6—10 und 12 dargelegt, dadurch charakterisiert, dass die Basisaufnahme in Schwarz/Weiss gemacht wird, und die einzufügenden Elemente in Farbe realisiert werden (oder umgekehrt).

15. Verfahren, wie in Punkt 1—5, 11 und 13 ausgeführt, dadurch charakterisiert, dass sich die Elemente auf dem Basisfoto ansammeln, die einen über den anderen, so dass sich ein evolutives, geschichtetes Bild ergibt, in dem Elemente zugefügt—oder aus dem Basisfoto weggelassen werden können (oder umgekehrt).

16. Evolutive Fotokomposition, wie in Punkt 6—10, 12 und 14 dargelegt, dadurch charakterisiert, dass das Basisfoto z.B. mehrere Personen enthält und die Elemente die dem Basisfoto zugefügt werden sollen, den gleichen Dekor ohne Personen beinhalten, so dass dieser nach und nach verschwindet, solange wie die Elemente auf die Basis plaziert werden.

17. Verfahren, wie in Punkt 1—5, 11, 13 und 15 dargelegt, dadurch charakterisiert, dass das Verfahren in verschiedenen zeitlichen Phasen ausgeführt wird, in dem der Fotoapparat präzise auf die gleiche Stelle gesetzt wird. Interventionen in zeitlichen Abständen, vom Typ "Fabrikaufbau" o.ä. die auf dem Basisbild nach und nach (schrittweise) die Elemente entstehen lassen, die sich mit dem zeitablauf verändern.

18. Verfahren, wie in Punkt 1—5, 11, 13, 15 und 17, charakterisiert durch den Gebrauch eines Computers, der einen optischen Lichtstift steuert und ein Zerschneideverfahren (Laser o.ä.) benutzt, um die sich ergänzenden Aufnahmen zu zerlegen, die so auf das Basisbild übertragen werden können, je nach ihren eigenen konturen.

## Claims

1. A method for producing an evolutive photographic composition, which method consists in photographing with a camera the scenery alone, that is to say elements of landscape which are intended to remain unchanged in the photographic composition, causing a predetermined grid of registration lines to appear on the basic photograph obtained in this manner, in order to facilitate handling, and then, without moving the camera, or by replacing it at the same location very accurately, in photographing as many times as is desired, the evolutive subject by placing it, or by replacing it on each occasion, with respect to the same landscape, in such a manner as to obtain a plurality of prints, each marked with the same grid of registration lines as the basic photograph, and which are distinguished from one another only by the position of the subject, in cutting the said prints along registration lines of the grid, in such manner as to isolate the element or elements including the variable subject, and then in producing evolutive images by applying at least one of the said elements of at least one of the prints to its corresponding location on the basic photograph.

2. The method for producing an evolutive photographic composition, which method consists in photographing with a camera the scenery alone, that is to say elements of landscape which are intended to remain unchanged in the photographic composition, and, without moving the camera, or by replacing it at the same location very accurately, in photographing as many times as is desired, the evolutive subject by placing it, or by replacing it on each occasion, at a different location, or in a different orientation, with respect to the same landscape, in such a manner as to obtain a plurality of prints which are distinguished from one another only by the position of the subject, in cutting the said prints along the natural lines existing in the photograph, for the utilization of the method, in such a manner as to isolate the element or elements including the variable subject, and then in producing evolutive images by applying at least one of the said elements of at least one of the prints to its corresponding location on the basic photograph.

3. The method as claimed in Claim 1, which consists in placing on either the rear screen or the front screen of the viewfinder, a mesh of registration lines, like for example a square pattern, and then at the printing stage, in placing on the negative obtained a device which permits the formation, on the positive, of a mesh identical to that which is situated on the screen of the viewfinder, the said device being constituted by a film or a transparent screen marked with the square pattern.

4. The method as claimed in Claim 1, which consists in placing on the screen of the viewfinder, a mesh of registration lines, like for example a square pattern, and in placing in the dark chamber part of the camera in contact with the unexposed negative, a screen or a transparent film marked with the same grid of lines as that of the viewfinder.

5. The method as claimed in Claim 1, which consists in placing on the screen of the viewfinder, a mesh of registration lines, for example a square pattern, and then, at the printing stage, in placing on the positive a device permitting the formation, on the photograph, of an identical mesh, on the scale of that placed either on the rear or on the front screen of the viewfinder, the said device being constituted by a margin stop composed of wires.

6. An evolutive photographic composition, which comprises a basic photograph representing a given set of scenery, and on which there is marked a square pattern of registration lines (10), which define unit photograph elements (12) on the said basic photograph, and, a set of photograph elements (14, 16) obtained by photographing, in the same scenery, with the same optical systems or different optical systems in certain cases, an evolutive subject occupying, for each photograph, a different position or expression, the said set of photograph elements (14, 16) equally marked by a square pattern of registration lines like the basic photograph, and then in cutting out the said photographs along the registration lines in such a manner as to isolate the subject, the said basic photograph and the said photograph elements being provided with detachable means permitting the photograph elements to be fixed in a detachable manner on the basic photograph.

7. The evolutive photographic composition as claimed in Claim 6, wherein the said photograph elements and the said basic photograph may be affixed to reinforcing supports which are intended to rigidify them.

8. The evolutive photographic composition as claimed in Claim 6 and 7, wherein the said detachable means are formed by bands referred to as "Velcro", which are affixed to the reverse side of the supports of the photograph elements, being applied to the basic photograph on a tissue.

9. The evolutive photographic composition as claimed in Claim 6, wherein the said detachable means are formed by reusable double-face adhesive strips or blocks, type "Scotch 3M" or other, which are affixed to the reverse side of the supports of the photograph elements to be placed temporarily on the basic photograph.

10. The evolutive photographic composition as claimed in Claim 6, wherein the said photograph elements are affixed to ferrous metal supports, while the basic photograph is affixed to a magnetic plate, or vice versa or any other means of a temporary fixation.

11. The evolutive photographic composition as claimed in Claim 1 to 5, wherein the basic image is produced by virtue of the use of a taking lens of the wide-angle type, and the elements to be added thereto are provided by virtue of the use of a taking lens of the telephoto type, or vice versa.

12. The evolutive photographic composition as claimed in Claim 6 to 10, wherein the elements to be added to the basic image are deliberately placed outside the limits of this image, in such a manner as to destructure the initial image.

13. The evolutive photographic composition as claimed in Claim 1 to 5 and 11, which composition is defined by the use of an underexposed negative placed on or under the sighting screen, of a first view, to place subsequently, on the basic image, the elements which were absent when the initial view was taken.

14. The evolutive photographic composition as claimed in any of the Claims 6 to 10 and 12, which composition is defined in that the basic image is in "Black and White", and the elements to be added there to are in color, or vice versa.

15. The evolutive photographic composition as claimed in Claim to 5, 11 and 13, which composition is defined by the accumulation of elements on the basic image, one on top of the other, in order to obtain an image which is evolutive in thickness, by removing or by replacing the elements on the basic image, or vice versa.

16. The evolutive photographic composition as claimed in Claim 6 to 10, 12 and 14, which composition is defined in that the basic image includes (for example) numerous people and the elements to be added to the basic image include the same scenery without any person, in order to cause them to disappear progressively as the elements are placed on the basic image.

17. The evolutive photographic composition as claimed in Claim 1 to 5, 11, 13 and 15, which composition is defined by the use of the method at different times, by replacing the camera at the same location very accurately for chronological operations in the works construction style or otherwise, in order to cause the elements which have changed during this time to appear on the basic image progressively.

18. The evolutive photographic composition as claimed in Claim 1 to 5, 11, 13, 15 and 17, which composition is defined by the use of a computer controlling a reader of the optical pen type and a cutting system which is of the laser type, in order to cut out the supplementary images to be placed on the basic image, along their own contour.

FIG. 1

FIG. 2

FIG.3

FIG.4

FIG.5

FIG.6